Europäisches Patentamt

European Patent Office

Office européen des brevets

(19)

(11) **EP 1 549 017 A1**

(12) **DEMANDE DE BREVET EUROPEEN**

(43) Date de publication:
**29.06.2005 Bulletin 2005/26**

(51) Int Cl.$^7$: **H04L 29/06**, H04L 12/56

(21) Numéro de dépôt: **04293035.4**

(22) Date de dépôt: **17.12.2004**

| | |
|---|---|
| (84) Etats contractants désignés:<br>**AT BE BG CH CY CZ DE DK EE ES FI FR GB GR HU IE IS IT LI LT LU MC NL PL PT RO SE SI SK TR**<br>Etats d'extension désignés:<br>**AL BA HR LV MK YU** | (72) Inventeurs:<br>• **Bertrand, Sébastien**<br>  **75020 Paris (FR)**<br>• **Pelous, Gilbert**<br>  **06410 Biot (FR)** |
| (30) Priorité: **23.12.2003 FR 0315298** | (74) Mandataire:<br>**Habasque, Etienne Joel Jean-François et al** |
| (71) Demandeur: **FRANCE TELECOM**<br>**75015 Paris (FR)** | **Cabinet Lavoix**<br>**2, Place d'Estienne d'Orves**<br>**75441 Paris Cédex 09 (FR)** |

(54) **Procédé et système de gestion temporelle de la transmission en réseau d'une pluralité de fichiers numériques entre une adresse d'origine et une adresse de destination**

(57) L'invention concerne un procédé et un système de gestion temporelle de la transmission en réseau d'une pluralité de fichiers numériques entre une adresse d'origine et une adresse de destination.

On attribue (A) à chaque fichier candidat ($F_j$) une date limite de réception ($RDL_j$) dite date d'échéance, on détermine (B), pour chaque fichier ($F_j$), la date d'envoi $TD_j(RDL_j)$ compte tenu au moins de la date d'échéance et on transmet (C) chaque fichier candidat en effectuant des reprises de transmission successives, tant que le fichier candidat n'a pas été intégralement transmis antérieurement à la date d'échéance.

Application à la transmission de fichiers en réseau selon le protocole TCP/IP.

FIG.1a

**Description**

L'invention est relative à un procédé et à un système de gestion temporelle de la transmission de fichiers de données numériques en réseau.

Avec la multiplication des facilités d'accès au réseau INTERNET, le nombre et le volume des transactions sur le réseau précité, et, de manière plus large, sur tout réseau IP a cru de manière spectaculaire.

Cet accroissement a été accompagné d'un accroissement correspondant du volume de données échangées, en particulier par l'accroissement de la diversité des types de fichiers échangés, en raison notamment de la montée en puissance des terminaux des utilisateurs mais aussi de l'accroissement relatif des capacités de transfert des réseaux précités.

En particulier, l'avènement, relativement récent, de l'échange sur les réseaux précités, de fichiers vidéos, de télévision numérique, de cinéma ou autre, ou plus généralement d'informations en masse se heurte toujours à un problème d'absence d'adéquation véritable des capacités réelles de transmission des réseaux précités à une transmission fluide de tout fichier de données numériques candidat au transfert.

L'une des raisons de l'absence d'adéquation précitée réside notamment dans la diversité des branches de réseau successives constitutives d'un trajet de transfert entre une adresse d'origine et une adresse de destination, ces branches pouvant comporter des réseaux ou parties de réseaux aussi divers que réseau téléphonique commuté, réseau local, réseau étendu par voie terrestre et/ou satellitaire.

Une telle diversité devient critique, en termes de capacités de transmission, dans le cas de demandes de transfert de fichiers dont le volume, en termes d'espace mémoire occupé, est d'un ordre de grandeur supérieur à la bande passante disponible sur le trajet de transfert du réseau.

Ce phénomène peut en outre être accentué en raison de l'absence de contrôle temporel de la transmission des fichiers de données, sous forme de paquets de données, sur le réseau IP, l'intégrité de la transmission étant, en général, simplement vérifiée comme complète ou incomplète à l'adresse de réception d'un fichier transmis.

Afin de réduire les inconvénients, en termes d'utilisation, du phénomène précité, des études spécifiques ont été menées, dans le but de proposer un partage équitable de la bande passante disponible, au niveau des équipements réseaux, routeurs et commutateurs, soit, en définitive, au niveau des paquets de données transmis.

En particulier, on peut citer les travaux relatifs à la gestion rationnalisée des files d'attente, désignée "Fair Queuing" ou "Weighted Fair Queuing", et leur principale mise en oeuvre sous la forme de processus d'accès au réseau IP du type "Round Robin" ou "Weighted Round Robin".

Les techniques d'ordonnancement ont été avant tout étudiées dans le domaine de la productique.

Les principaux protocoles de transfert de fichiers sur les réseaux IP ont été décrits et établis dans les documents, "Request For Comments" :

RFC 959 : File Transfer Protocol (FTP) ; RFC 783 : Trivial File Transfer Protocol (TFTP). Ces documents édités par l'IETF (Internet Engineering Task Force) sont disponibles sur le site WEB de cette organisation à l'adresse www.ietf.org.

Les inconvénients des protocoles précités sont rédhibitoires, lorsque de gros ou très gros fichiers doivent être transférés entre une adresse d'origine et une adresse de destination d'un réseau.

Dans cette situation, plusieurs paramètres entrent en jeu, notamment :

- le temps de transfert, qui peut facilement être de l'ordre de plusieurs heures, lorsque le volume du fichier à transférer est d'un ordre de grandeur supérieur à la bande passante disponible dans le réseau. A titre d'exemple, le transfert d'un fichier vidéo de taille de 2 Gigabits sur un réseau dont la bande passante est de 2 Mbits dure 8192 secondes , dans le meilleur cas, soit 2 heures 16 minutes et 32 secondes ;
- la fiabilité du transfert, liée à la fiabilité, au processus de transmission par paquets de données et au processus de routage de ces derniers.

En effet, il peut arriver que le processus de transfert soit interrompu par un incident réseau. Bien que les protocoles de transfert de type FTP permettent d'effectuer la reprise d'un transfert interrompu, la commande de reprise doit être envoyée de manière explicite, par l'utilisateur du terminal récepteur situé à l'adresse du destinataire par exemple. Ceci implique, bien souvent, l'exercice par ce dernier d'une surveillance visuelle pas à pas du transfert, ce qui peut être extrêmement contraignant ;

- la prise en compte de la notion de priorité et de partage de liens du réseau : pour un lien du réseau constitué par les ressources de transmission entre deux noeuds d'un réseau, tels que commutateurs ou routeurs, lorsqu'une demande de transfert de fichier à laquelle une priorité élevée a été attribuée doit être prise en compte, alors qu'un transfert de fichier de priorité moindre est déjà en cours, il est nécessaire d'interrompre le transfert en cours pour donner la main au transfert candidat de priorité plus élevée, sauf à dénier toute valeur au processus d'attribution de priorité, quitte à reprendre ultérieurement le transfert interrompu, lorsque le transfert de priorité plus élevée est terminé. En tout état de cause, les interruptions et reprises précitées doivent être commandées de manière explicite, par l'opérateur du réseau par exemple.

L'ensemble des paramètres précités gouvernant le processus de transfert ne peut être pris en compte simultanément que lorsque les demandes de transfert à exécuter en réseau sont toutes connues à l'avance.

Une telle situation ne peut guère se présenter de manière réaliste que dans le cas idéal d'une demande de transfert multifichiers gérée en réseau local par exemple.

Lorsque les demandes de transfert ne peuvent pas être connues à l'avance, en raison de l'apparition aléatoire, ou quasi aléatoire, de requêtes de transfert de priorité quelconque, l'utilisation optimisée des ressources réseaux disponibles ne peut être valablement effectuée. C'est en particulier le cas au niveau des noeuds, tels que les routeurs et commutateurs, de l'ensemble des réseaux IP et INTERNET où la simple gestion des paquets ou groupes de paquets de données IP transmis de manière quasi aléatoire en raison du processus de routage ne permet pas de remédier à l'inconvénient précité.

La présente invention a pour objet de remédier à l'ensemble des inconvénients des techniques de l'art antérieur précité.

En particulier, un objet de la présente invention est la mise en oeuvre d'un procédé et d'un système de gestion temporelle de la transmission de fichiers de données numériques en réseau permettant la prise en compte de l'ensemble des paramètres gouvernant le transfert, indépendamment de la localisation du noeud de réseau exécutant ce transfert, que ce soit le routeur d'interconnexion d'un réseau local à une passerelle d'accès au réseau INTERNET ou le routeur ou le commutateur d'un réseau étendu et/ou du réseau INTERNET exécutant un tel transfert.

Le procédé de gestion temporelle de la transmission en réseau d'une pluralité de fichiers numériques candidats au transfert entre une adresse d'origine et une adresse de destination, représentatives d'un trajet de transfert, chacun des fichiers candidats comportant un volume de données déterminé à transférer, objet de la présente invention, est remarquable en ce qu'il consiste, pour chaque fichier candidat, à attribuer une date limite de réception à l'adresse de destination, dite date d'échéance, déterminer la date d'envoi, compte tenu au moins de la date d'échéance, transmettre chaque fichier candidat, par l'intermédiaire d'un protocole de transmission de données numériques, en effectuant des reprises de transmission successives, tant que ce fichier candidat n'a pas été intégralement transmis ultérieurement à la date d'échéance.

Le procédé et le système de gestion temporelle de la transmission de fichiers de données numériques en réseau conformes à l'objet de la présente invention seront mieux compris à la lecture de la description et à l'observation des dessins ci-après dans lesquels,

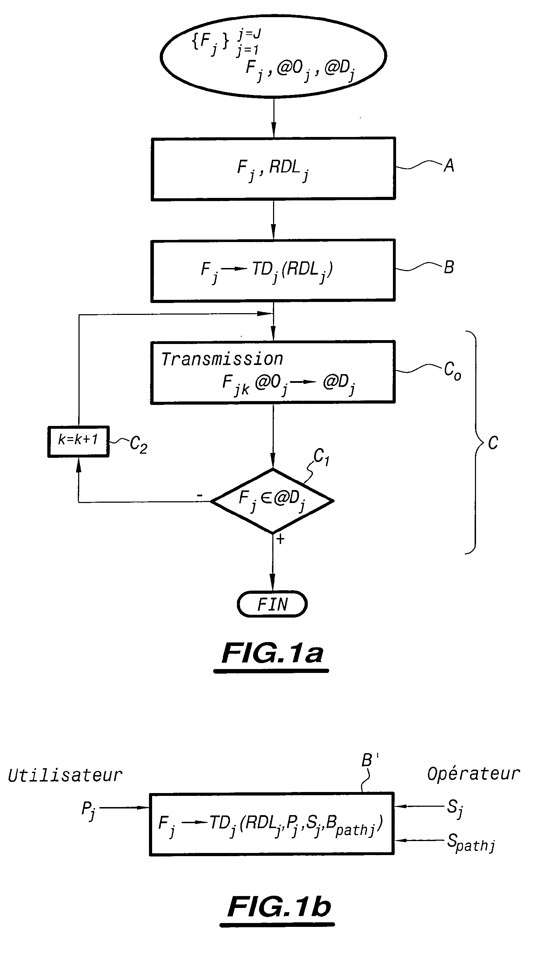

- la figure 1a représente, à titre purement illustratif, un organigramme des étapes essentielles permettant la mise en oeuvre du procédé objet de la présente invention ;
- la figure 1b représente, à titre purement illustratif, un détail de mise en oeuvre de l'étape B de mise en oeuvre du procédé objet de l'invention tel que représenté en figure 1a ;

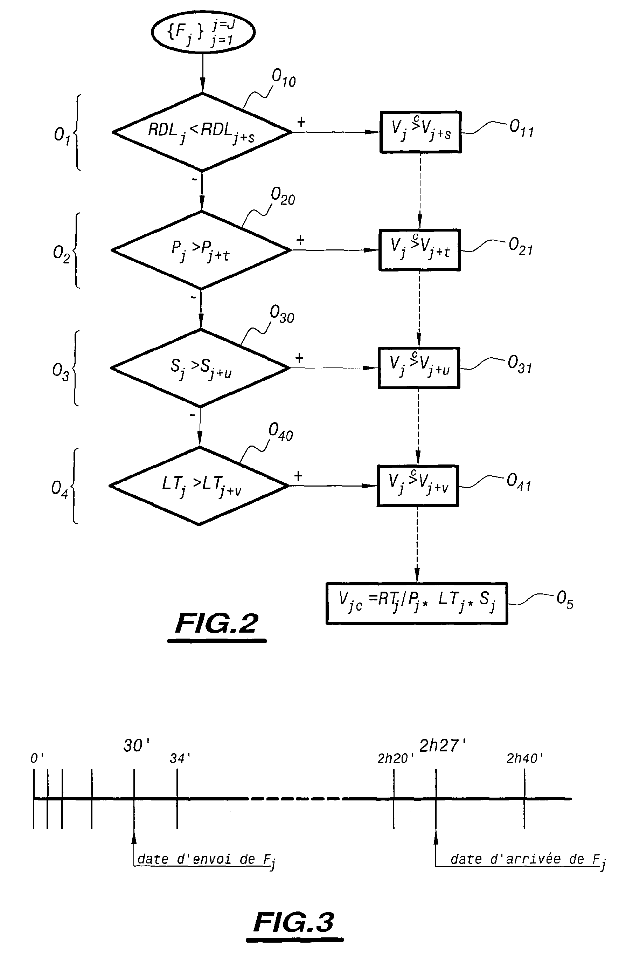

- la figure 2 représente un organigramme illustratif d'un processus d'attribution, à chaque fichier ou partie de fichier candidat à la transmission, d'une valeur d'ordonnancement spécifique ou critique permettant de classifier chaque fichier ou partie de fichier candidat en vue d'une optimisation de leur transmission ;
- la figure 3 représente, à titre illustratif, le temps effectif de transmission d'un fichier candidat évalué par rapport à une base temporelle relative sui generis, élaborée de manière spécifique pour la mise en oeuvre du procédé objet de l'invention afin de permettre la gestion temporelle des opérations de transmission d'un même fichier sur des intervalles de temps à très grande dispersion de valeurs de la minute à un ou plusieurs mois ;

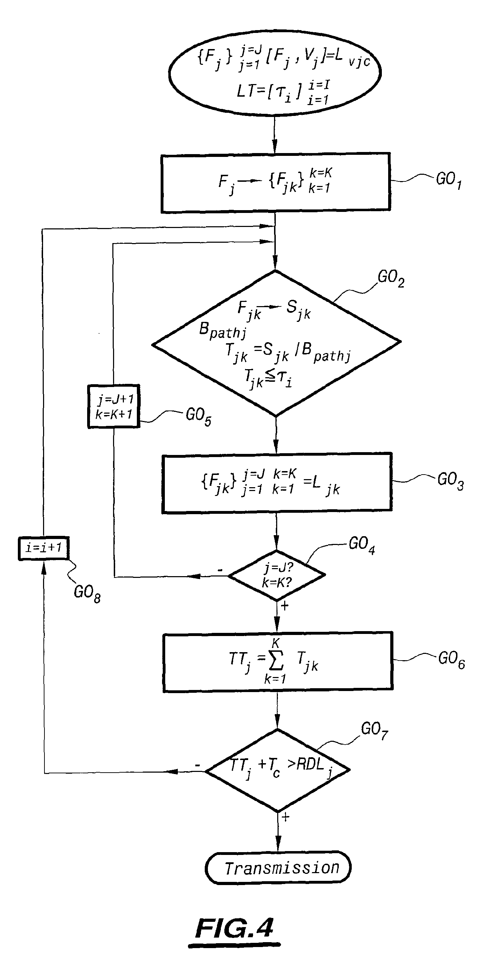

- la figure 4 représente, à titre illustratif, un organigramme de mise en oeuvre d'un processus d'ordonnancement de fichiers ou parties de fichiers candidats selon un mode dit synchrone vis-à-vis de la base de temps relative représentée en figure 3, dans lequel l'ordonnancement pour transmission des fichiers candidats n'est, en pratique, pas modifié pendant la transmission, une telle situation pouvant se produire en particulier au niveau d'un terminal utilisateur client ;

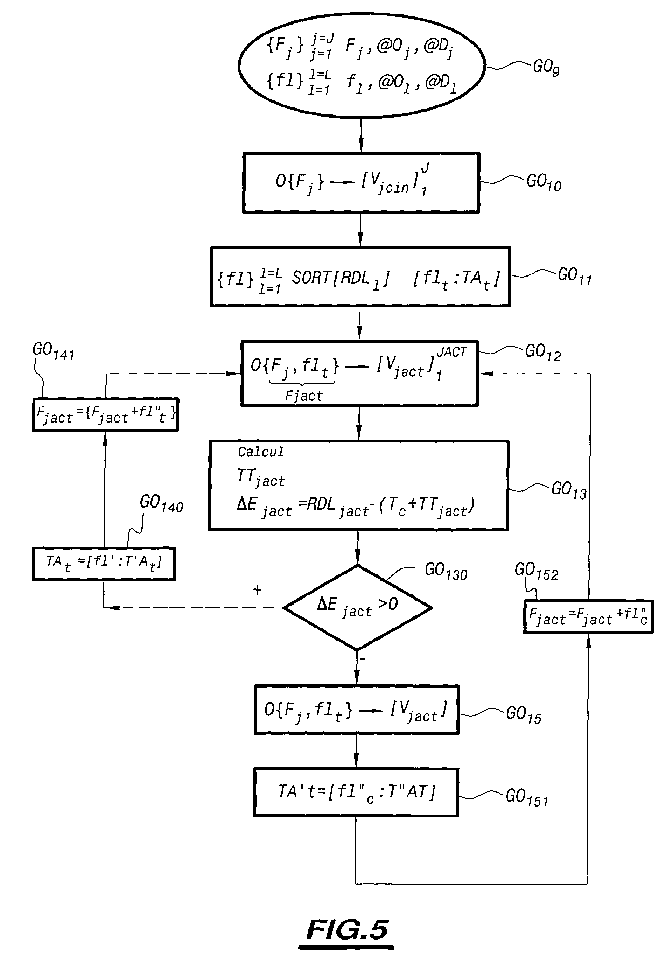

- la figure 5 représente, à titre illustratif, un organigramme de mise en oeuvre d'un processus d'ordonnancement pour transmission de fichiers ou parties de fichiers candidats selon un mode dit asynchrone, dans lequel l'ordonnancement pour transmission des fichiers candidats est en pratique modifié pendant la transmission, en raison de l'existence d'une requête de transmission d'un nouveau fichier candidat, soit au niveau d'un terminal utilisateur client, soit au niveau d'un routeur ou noeud de réseau, sur occurrence d'une partie de nouveau fichier tel qu'un paquet de données IP ;

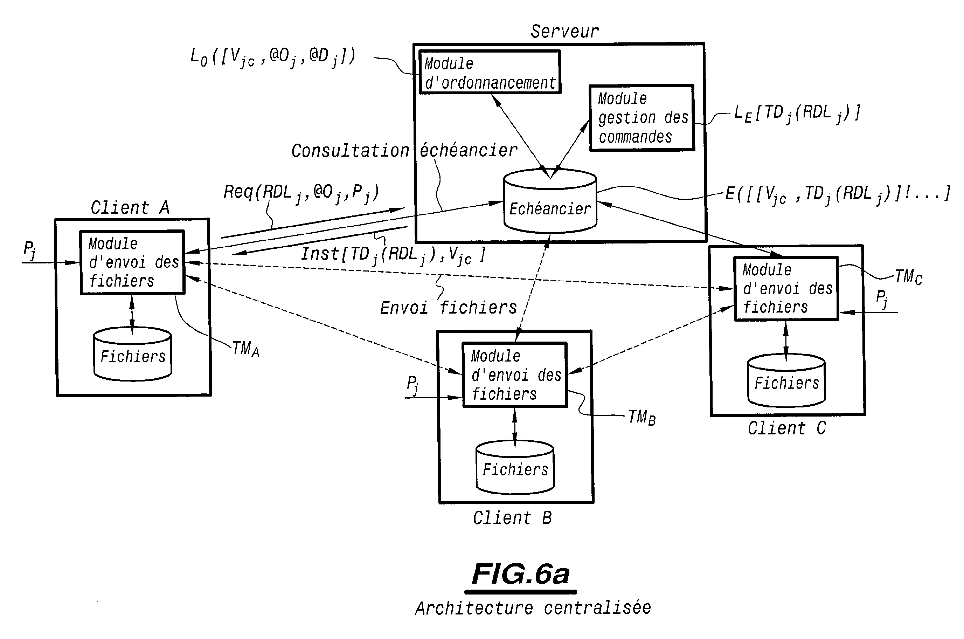

- la figure 6a représente, à titre illustratif, le schéma fonctionnel d'un système de gestion temporelle de la transmission en réseau d'une pluralité de fichiers numériques candidats au transfert, dans un mode de mise en oeuvre non limitatif dans lequel le module et le processus d'attribution d'une date d'envoi à chaque fichier ou partie de fichier candidat sont implémentés dans un serveur hébergé sur un site centralisé ;

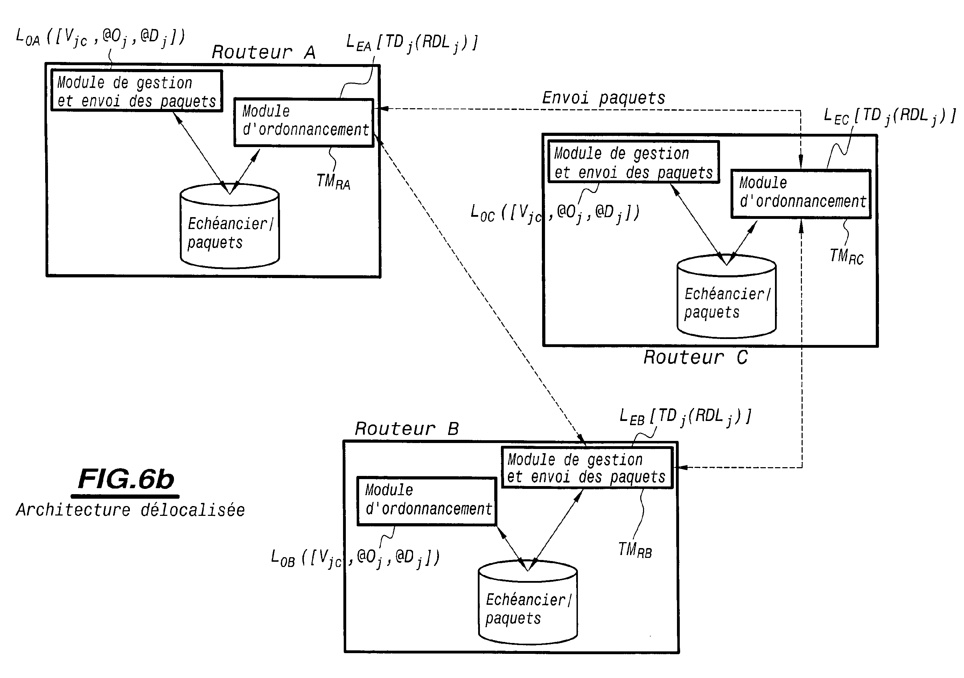

- la figure 6b représente, à titre illustratif, le schéma fonctionnel d'un système de gestion temporelle de la transmission d'un réseau d'une pluralité de fichiers numériques candidats au transfert, dans un autre mode de mise en oeuvre non limitatif dans lequel le module et le processus d'attribution d'une date d'envoi à chaque fichier ou partie de fichier candidat sont implantés au niveau de chaque noeud d'un réseau étendu, tel qu'un routeur, le procédé objet de l'invention, dans ce mode d'implantation étant avantageusement mis en oeuvre au niveau de parties de fichiers TCP/IP candidats, tels que les paquets de données transmis par le protocole.

Une description plus détaillée du procédé de gestion temporelle de la transmission en réseau d'une pluralité de fichiers de données numériques candidats au transfert entre une adresse d'origine et une adresse de destination conforme à l'objet de la présente invention sera maintenant donnée en liaison avec la figure 1a.

D'une manière générale, on rappelle que le procédé objet de la présente invention peut être mis en oeuvre sur tout type de réseau informatique, en particulier sur le réseau INTERNET ou tout réseau sur lequel les données sont transmises selon le protocole TCP/IP par exemple.

Dans ces conditions, le transfert de tout fichier candidat $F_j$ est effectué entre une adresse d'origine $@O_j$ et une adresse de destination $@D_j$. Ces adresses sont bien entendu représentatives d'un trajet de transfert déterminé. Le trajet de transfert n'est pas critique, si ce n'est par la bande passante de ce dernier, le trajet effectif entre routeurs par exemple pouvant être quelconque et laissé à la seule initiative du protocole de routage selon le protocole de transmission tel que le protocole TCP/IP précédemment cité par exemple.

Chacun des fichiers candidats $F_j$ comporte un volume de données $S_j$ déterminé à transférer.

Ainsi on comprend que le procédé objet de l'invention s'applique à un ensemble de fichiers candidats, cet ensemble étant nommé

$$\left\{F_j\right\}_{j=1}^{j=J}.$$

Ainsi qu'on l'a représenté en outre sur la figure 1a le procédé objet de l'invention consiste en une étape A à attribuer à chaque fichier candidat $F_j$ une date limite de réception à l'adresse de destination, cette date limite de réception $RDL_j$ étant désignée date d'échéance. On comprend en particulier que la date de réception $RDL_j$ désigne la date de réception effective totale du fichier $F_j$ à l'adresse de destination $@D_j$.

L'étape A est alors suivie d'une étape B consistant à déterminer pour chaque fichier candidat la date d'envoi de ce dernier, compte tenu au moins de la date d'échéance précitée.

Sur la figure 1a, la date d'envoi est notée :

$$TD_j \ (RDL_j).$$

La notation précédente représente la détermination de la date d'envoi pour chaque fichier candidat $F_j$ en fonction de la date d'échéance $RDL_j$.. La date d'envoi est déterminée pour une transmission à partir de l'adresse de départ $@O_j$.

L'étape B ainsi que représentée en figure 1a est elle-même suivie d'une étape C consistant à transmettre chaque fichier candidat $F_j$ par l'intermédiaire d'un protocole de transmission de données numériques tel que le protocole TCP/IP précédemment cité en effectuant des reprises de transmission successives tant que le fichier candidat $F_j$ précité n'a pas été intégralement transmis antérieurement à la date d'échéance $RDL_j$.

Sur la figure 1a, on a représenté le détail de mise en oeuvre de l'étape C consistant à transmettre chaque fichier candidat par l'intermédiaire d'un protocole de données numériques.

En particulier, ainsi que représenté sur la figure 1a précitée, à l'étape $C_0$ la transmission est représentée symboliquement par la transmission d'un sous-fichier $F_{jk}$ de rang k de l'adresse d'origine $@O_j$ vers l'adresse de destination $@D_j$ selon la notation :

$$F_{jk}@O_j \rightarrow @D_j.$$

La notation précédent désigne en fait la transmission partielle de rang k du sous fichier $F_{jk}$ du fichier candidat $F_j$.

L'étape $C_0$ est alors suivie d'une étape $C_1$ consistant à vérifier si le fichier candidat $F_j$ a été intégralement reçu à l'adresse de destination $@D_j$.

L'étape de vérification précitée est notée $F_j \in @D_j$?

Pour la mise en oeuvre de l'étape de vérification C précitée, on indique que cette dernière peut être exécutée au niveau de l'adresse d'origine par exemple par vérification de l'absence d'un accusé de réception de la transmission intégrale du fichier candidat $F_j$ conformément au protocole de transmission tel que le protocole TCP/IP par exemple.

Sur réponse négative au test de vérification $C_1$, le fichier candidat $F_j$ n'ayant pas été intégralement transmis, l'incrémentation à l'étape $C_2$ au rang k =k+1 du sous fichier $F_{jk}$ permet le rappel de la transmission à l'étape $C_0$ pour le sous fichier suivant constitutif du fichier candidat $F_j$.

L'opération peut ainsi être effectuée successivement tant que la réponse au test de vérification $C_1$ est négative.

Au contraire, sur réponse positive au test de vérification $C_1$ l'opération de transmission est terminée et le procédé objet de l'invention appelle alors une étape de fin.

En ce qui concerne la mise en oeuvre de l'étape B représentée en figure 1a consistant à déterminer pour chaque fichier candidat $F_j$ la date d'envoi compte tenu au moins de la date d'échéance $RDL_j$ on indique que, dans un mode de réalisation avantageux, le procédé objet de l'invention consiste à attribuer à chaque fichier candidat $F_j$ une priorité de transmission $P_j$ et à déterminer la date d'envoi compte tenu de la valeur de priorité de transmission attribuée au fichier candidat $F_j$ considéré. En outre, selon un autre aspect particulièrement avantageux du procédé objet de la présente invention, celui-ci consiste à déterminer la date d'envoi $RDL_j$ compte tenu du volume $S_j$ de données déterminé à transférer, c'est-à-dire du volume du fichier candidat $F_j$.

Enfin, et selon un autre aspect particulièrement remarquable du procédé objet de la présente invention, ce dernier à consiste à déterminer la date d'envoi $RDL_j$ de chaque fichier candidat $F_j$ compte tenu de la bande passante disponible $B_{pathj}$ sur le trajet de transfert défini entre l'adresse d'origine et l'adresse de destination.

D'une manière plus spécifique, on indique que le temps nécessaire au transfert d'un fichier est bien entendu déterminé par les paramètres de débit des liens qui composent son trajet, les liens étant connus à priori de l'opérateur de réseau assurant la mise en oeuvre du protocole de transfert des données. En particulier, on considère, dans le cadre de la mise en oeuvre du procédé objet de la présente invention, que lorsqu'un fichier candidat est en cours de transfert, il a à sa disposition la totalité de la bande passante du réseau disponible et en particulier les limitations imposées par le protocole de transmission sont celles inhérentes au type de réseau utilisé.

Sur la figure 1b, on a représenté un mode de mise en oeuvre spécifique de l'étape B de la figure 1a, l'opération de détermination de la date d'envoi étant notée selon la notation :

$$F_j \rightarrow TD_j \ (RDL_j, P_j, S_j, B_{pathj}).$$

On comprend en particulier que la détermination de la date d'envoi précitée est alors mise en oeuvre à partir des paramètres de transmission constitués par la date de réception du fichier candidat $F_j$, date $RDL_j$, la priorité $P_j$ attribuée au fichier candidat $F_j$, le volume de données $S_j$ constitutif du fichier $F_j$ et enfin la bande passante $B_{pathj}$ sur le trajet relayant l'adresse d'origine à l'adresse de destination.

Dans un mode de mise en oeuvre plus particulièrement avantageux tel que représenté en figure 1b, on indique que la priorité de transmission affectée au fichier $F_j$, c'est-à-dire la valeur $P_j$, peut être laissée à l'initiative de l'utilisateur, c'est-à-dire d'un abonné accédant au réseau et au service de transmission de données par le protocole TCP/IP par exemple.

A titre d'exemple non limitatif, la valeur de la priorité de transmission peut être choisie entre cinq valeurs de 1 à 5 arbitraires à l'initiative de l'utilisateur.

Il en est de même pour ce qui concerne la date de réception du fichier à l'adresse de destination $@D_j$.

Au contraire, les paramètres tels que volume de données du fichier à transmettre $S_j$ et bande passante sur le trajet de transmission peuvent être introduits ou fournis par l'opérateur du service de transmission des données, le volume de données transmises $S_j$ pouvant correspondre à celui du fichier après compression par exemple ou sur critère de limitation de volume de données transmises à l'initiative de l'opérateur. Le paramètre de bande passante peut être constitué par un paramètre de bande passante minimale assurée en fonction de la nature du fichier candidat transmis.

Un mode de mise en oeuvre préférentiel de l'étape B consistant à déterminer la date d'envoi, tel que représenté en figures 1a et 1b, sera maintenant donné en liaison avec la figure 2.

Le mode opératoire préférentiel représenté en figure 2 consiste, pour chaque fichier candidat $F_j$ de l'ensemble de fichiers candidats

$$\left\{F_j\right\}_{j=1}^{j=J},$$

à déterminer la date d'envoi en attribuant à chaque fichier candidat une valeur d'ordonnancement $V_{jc}$ établie à partir d'un processus d'ordonnancement multicritères lequel sera décrit ci-après.

En une étape $O_1$ à tout fichier candidat $F_j$ dont la date d'échéance $RDL_j$ est plus proche que celle d'un autre fichier candidat $F_{j+s}$ dont la date d'échéance $RDL_{j+s}$ vis-à-vis de la date courante est attribuée une valeur d'ordonnancement $V_j$ plus critique que celle $V_{j+s}$ de cet autre fichier candidat.

Cette opération peut être réalisée par une étape de test $O_{10}$ consistant à comparer par comparaison d'infériorité la date d'échéance $RDL_j$ à la date d'échéance $RDL_{j+s}$. Sur réponse positive au test $O_{10}$ une valeur d'ordonnancement $V_j$ plus critique que la valeur d'ordonnancement $V_{j+s}$ est attribuée au fichier candidat $F_j$ selon la relation :

$$V_j >^c V_{j+s}.$$

La notation $>^c$ désigne la relation valeur d'ordonnancement plus critique.

En outre, à tout fichier candidat $F_j$ dont la priorité est supérieure à celle d'un autre fichier candidat $F_{j+t}$ est attribuée en une étape $O_2$ une valeur d'ordonnancement $V_j$ plus critique que celle $V_{j+t}$ de cet autre fichier candidat. Cette opération peut être réalisée par une étape de tests $O_{20}$ Par comparaison de supériorité des valeurs de priorités $P_j > P_{j+t}$. L'étape $O_{20}$ est alors suivie, sur réponse positive, d'une étape $O_{01}$ consistant à attribuer une valeur d'ordonnancement $V_j$ plus critique que celle de l'autre fichier candidat selon la notation $V_j >^c V_{j+t}$.

En outre, une étape $O_3$ est prévue laquelle consiste pour tout fichier candidat $F_j$ dont la taille $S_j$ est supérieure à la taille $S_{j+u}$ d'un autre fichier candidat $F_{j+u}$ à attribuer une valeur d'ordonnancement $V_j$ plus critique que celle $V_{j+u}$ de cet autre fichier candidat. Cette opération à l'étape $O_3$ peut être réalisée par l'étape de test $O_{30}$ consistant en une comparaison de supériorité de la taille des fichiers candidats $S_j$ et $S_{j+u}$. Sur réponse positive à l'étape de test précitée une valeur d'ordonnancement $V_j$ est attribuée à l'étape $O_{31}$ selon la relation $V_j >^c V_{j+u}$. Cette notation désigne une valeur d'ordonnancement plus critique pour le fichier candidat $F_j$ que pour le fichier candidat $F_{j+u}$.

Enfin, une étape $O_4$ est prévue laquelle permet pour tout fichier candidat $F_j$ dont le temps écoulé en attente de transmission est supérieur à celui d'un autre fichier candidat $F_{j+v}$, d'attribuer une valeur d'ordonnancement $V_j$ plus critique que celle $V_{j+v}$ de cet autre fichier.

L'opération à l'étape $O_4$ peut être réalisée par une étape de test de comparaison de supériorité du temps écoulé $LT_j$ en attente de transmission pour le volume de données à transmettre pour le fichier $F_j$ vis-à-vis du même temps écoulé $LT_{j+v}$ en attente de transmission pour le volume de données à transmettre pour le fichier $F_{j+v}$. L'étape de test $O_{40}$ peut alors être suivie d'une étape $O_{41}$ consistant à attribuer la valeur d'ordonnancement plus critique que celle de cet autre fichier selon la notation $V_j >^c V_{j+v}$.

On comprend, en particulier, que bien que les étapes $O_1$ à $O_4$ représentées en figure 2 soient représentées pour deux fichiers distincts, les étapes précitées sont mises en oeuvre pour chaque fichier vis-à-vis de l'ensemble des autres fichiers en attente, et, qu'en conséquence, la valeur d'ordonnancement $V_j$ représentée aux étapes $O_{11}$, $O_{21}$, $O_{31}$ et $O_{41}$ correspond à une valeur effectivement modifiée à chaque opération par pondération par exemple.

Ensuite, on retient comme date d'envoi la date courante pour le fichier candidat dont la valeur d'ordonnancement est la plus critique. On comprend, en particulier, qu'en fonction de la pondération effectuée sur l'actualisation des valeurs d'ordonnancement successives attribuées la notion de valeur d'ordonnancement la plus critique peut correspondre à la valeur d'ordonnancement la plus faible parmi l'ensemble des valeurs d'ordonnancement attribuées à chacun des fichiers candidats.

Un mode de mise en oeuvre spécifique particulièrement avantageux de l'établissement de la valeur d'ordonnancement attribuée à chaque fichier sera maintenant décrit en liaison avec la figure 2.

Dans ce mode de réalisation, la valeur d'ordonnancement attribuée à chaque fichier candidat vérifie la relation :

$$V = temps\ restant\ /\ (priorité * temps\text{-}écoulé * taille).$$

Cette relation est représentée symboliquement à l'étape $O_5$ de la figure 2 selon la notation $V_{jc} = RT_j/P_j*LT_j*S_j$.

Dans les relations précédentes, on indique que :

- *temps restant*, $RT_j$ désigne le temps restant entre la date d'échéance et la date courante pour chaque fichier candidat ;
- *priorité*, $P_j$, désigne la valeur du coefficient de priorité valeur entière dont la valeur 1 est la valeur la plus petite et correspond à la valeur la plus faible ;
- *temps_écoulé*, $LT_j$, désigne le temps écoulé pour chaque fichier candidat entre la date courante et la date de prise en compte de la demande de transfert ;
- *taille*, $S_j$, désigne la taille du fichier en unité de taille mémoire occupée par chaque fichier candidat.

Le procédé objet de la présente invention permet, à partir des valeurs d'ordonnancement précitées, d'établir en quelque sorte des files d'attente pour la transmission de chaque fichier candidat, ces files d'attente pouvant être ordonnées de façon à gérer la transmission de chacun des fichiers candidats successifs. Bien entendu, le critère de constitution des files d'attente est essentiellement basé sur la valeur d'ordonnancement attribuée à chacun des fichiers candidats $F_j$.

Afin de pouvoir déterminer avec plus ou moins de précision les dates d'envoi et d'arrivée pour chaque fichier candidat se trouvant dans les files d'attente, le procédé objet de la présente invention, de manière particulièrement remarquable, fait en outre appel à une représentation segmentée du temps afin de permettre la mise en oeuvre des fonctions ci-après :

- ordonnancement des demandes de transfert pour chaque fichier candidat dont l'échéance est très proche de l'instant courant, de l'ordre de la dizaine de minutes aussi bien que des demandes de transfert de fichiers candidats dont l'échéance est de l'ordre de la semaine voire du mois ;
- dates d'envoi et d'arrivée à destination des fichiers candidats d'autant plus précises qu'elles sont proches de l'instant courant ;
- prise en compte des demandes de transfert au seul moment où celles-ci se présentent. Ce mode opératoire présente l'avantage selon lequel il est inutile de connaître avec une trop grande précision la date d'envoi d'un fichier candidat qui n'est sensé partir avant plusieurs heures, sachant qu'entretemps d'autres demandes de transfert de fichier candidat auront pu modifier sensiblement l'ordonnancement prévu.

Dans ce but, et selon un aspect particulièrement remarquable du procédé objet de la présente invention, l'opération consistant à déterminer la date d'envoi puis à transmettre chaque fichier candidat en effectuant des reprises de transmission successives, tant que le fichier de données candidat au transfert n'a pas été intégralement transmis, sont avantageusement exécutés en référence à des intervalles de temps discrets non décroissants constituant une base de temps relative.

La base de temps relative permet d'adapter la précision de l'établissement des dates d'envoi et de réception des fichiers candidats en fonction de la date courante vis-à-vis de la date d'échéance.

Pour les raisons citées précédemment dans la description, la base de temps relative précitée peut avantageusement comporter des intervalles de taille non décroissante et en particulier sensiblement croissante, reposant sur le découpage en segments temporels ci-après :

- de 0 à 30 minutes : 0-1-2-3-4-5-7-9-11-13-15-18-21-24-27-30 minutes
- de 30 minutes à 1 heure : 30-34-38-42-46-50-55-1 heure ;
- de 1 à 2 heures : 1-1h05-1h10-1h15-1h20-1h30-1h40-1h50-2 heures ;
- de 2 à 6 heures : intervalle d'une durée de 20 minutes ;
- de 6 à 12 heures : intervalle d'une durée de 30 minutes ;
- de 12 heures à 1 jour : intervalle d'une durée de 45 minutes ;
- de 1 à 2 jours : intervalle d'une durée d'une heure ;
- de 2 jours à une semaine : intervalle d'une durée de 6 heures ;
- d'une semaine à 4 semaines : intervalle d'une durée de 1 jour ;
- au-delà de 4 semaines : intervalle d'une durée infinie.

Compte tenu de la base de temps relative précitée, on indique que le procédé objet de la présente invention, autorise l'interruption d'un transfert en cours pour laisser la place à la transmission d'un fichier plus urgent.

En outre, ainsi que représenté en figure 3, un fichier candidat $F_j$ peut être amené à remplir plusieurs intervalles de temps. Parmi tous les intervalles de temps que remplit même partiellement un fichier, les intervalles de temps les plus pertinents, ainsi que représenté sur la figure 3 précitée, concernent le premier et le dernier.

Dans ces conditions, la date d'envoi du fichier candidat $F_j$ est avantageusement celle du début de premier intervalle de temps contenant le fichier, date la plus ancienne vis-à-vis de la date courante et la date d'arrivée du fichier est quant à elle évaluée en considérant la proportion du dernier intervalle de temps qu'occupe le fichier candidat $F_j$.

En référence à la figure 3, on comprend que la date d'envoi retenue pour un fichier de volume de données $S_j$ spécifique correspond, vis-à-vis de la date de réception $F_j$, à la date courante la plus ancienne correspondant au segment de taille la plus petite de la base de temps relative permettant le recouvrement total de la durée de transmission du fichier candidat $F_j$ précité.

En ce qui concerne la transmission proprement dite des données constitutives de chaque fichier candidat, on admet que chaque fichier candidat est présent simultanément sur tous les liens qui composent son parcours ou sa route et dans les mêmes intervalles de temps. En particulier, le retard induit par la progression du fichier candidat le long de son trajet n'est pas pris en compte. Cette hypothèse est justifiée par le fait que l'envoi d'un fichier candidat est effectué par transmission FTP depuis le noeud d'origine vers le noeud de destination et qu'en conséquence le nombre de liens entre les sites origine et destination dans le réseau n'est, en général, pas très élevé.

En ce qui concerne la mise en oeuvre du processus d'ordonnancement, c'est-à-dire du calcul de la valeur d'ordonnancement attribuée à chaque fichier candidat on indique que ce dernier peut être exécuté soit de manière synchrone et périodique, la période d'exécution du processus d' ordonnancement étant alors définie avantageusement à partir d'un intervalle de temps discret spécifique constitutif de la base de temps relative, soit de manière asynchrone sur commande ou évènement explicite.

On indique que, bien entendu, le mode asynchrone est déclenché soit à l'initiative de l'opérateur de réseau ou le webmestre par exemple, soit au contraire sur occurrence d'une nouvelle requête de transmission par un nouveau fichier candidat à la transmission qui, dans l'ordonnancement précédent, n'avait pas été prise en compte. On indique que la prise en compte de chaque fichier candidat peut, bien entendu, être effectuée à partir du nom du fichier et de l'adresse d'origine et de destination de ce dernier.

Une description plus détaillée d'un processus de gestion de l'ordonnancement en vue de la transmission d'un ensemble de fichiers candidats

$$\left\{F_j\right\}_{j=1}^{j=J},$$

triés par valeur d'ordonnancement critique $V_{jc}$ , la valeur d'ordonnancement critique correspondant par exemple à la valeur allouée ainsi que décrit précédemment dans la description en liaison avec la figure 2, sera maintenant donnée en liaison avec la figure 4.

En référence à la figure précitée, on indique que les fichiers candidats $F_j$ sont triés par valeur d'ordonnancement critique selon une liste d'attente ordonnée :

$$L_{Vjc} = [F_j, V_{jc}]$$

En référence à la même figure 4, on désigne par

$$LT = [\tau i]_{i=1}^{i=I},$$

l'ensemble des intervalles de temps non décroissants formant la base de temps relative LT représentée par ces derniers.

En référence à la figure 4, le mode de gestion du processus d'ordonnancement pour la transmission consiste alors, pour chaque fichier candidat $F_j$ de la liste ordonnée $L_{Vjc}$, à fractionner chaque fichier candidat en une étape $GO_1$ en une pluralité de sous-fichiers candidats de taille restreinte

$$\{F_{jk}\}_{k=1}^{k=K},$$

cette pluralité constituant l'ensemble des sous fichiers $F_{jk}$ précités. La même lettre k désigne un sous fichier et la transmission de rang correspondant à ce dernier selon la figure 1a.

Le processus d'ordonnancement consiste ensuite pour chaque fichier candidat $F_{jk}$ à déterminer l'indice $_i$ de l'intervalle de temps discret de la base de temps relative LT telle que :

- pour chaque liste d'attente ordonnée relative au trajet de transfert associé à la demande de transfert considérée, il existe une bande passante disponible pour assurer le transfert du sous fichier candidat sur le trajet de transfert dans intervalle de temps discret d'indice $_i$ considéré ;
- l'indice $_i$ retenu est l'indice de valeur minimum.

Les opérations précitées peuvent être mises en oeuvre par exemple en une étape de test $GO_2$ représentée sur la figure 4 à partir du volume de données numériques $S_{jk}$ de chaque sous-fichier candidat $F_{jk}$ et de la bande passante disponible $B_{pathj}$ pour assurer le transfert du sous-fichier candidat sur le trajet de transfert. On calcule alors la durée de transmission du volume de données $S_{jk}$ sur le trajet de transfert avec la bande passante $B_{pathj}$ pour le sous fichier candidat $F_{jk}$ selon la relation :

$$T_{jk} = S_{jk} / B_{pathj}.$$

La valeur de la durée de transmission $T_{jk}$ du volume de données $S_{jk}$ pour le sous fichier $F_{jk}$ est alors comparée par comparaison d'infériorité à l'intervalle de temps $\tau i$ minimum de la base de temps relative LT.

L'étape de tests $GO_2$ est alors suivie d'une étape $GO_3$ d'insertion pour transmission de tous les sous fichiers retenus selon une liste d'attente $L_{jk}$ ordonnée pour le transfert.

La liste d'attente précitée vérifie la relation :

$$L_{jk} = \left\{F_j\right\}_{j=1\ \ k=1}^{j=J\ \ k=K}$$

Bien entendu, les opérations $Go_2$ et $GO_3$ sont répétées pour tous les fichiers d'indice $_j$ jusqu'au fichier d'indice J et pour tous les sous-fichiers de rang $_k$ jusqu'aux sous fichiers de rang K associés à chacun des fichiers candidats précités par une étape d'incrémentation des indices $_j$ et $_k$ à la valeur supérieure j+1 et k+1 respectivement en une étape $GO_5$ gouvernée par une étape de test $GO_4$ de la valeur des indices j et k à leur valeur maximale et retour par appel successif des étapes $GO_2$ et $GO_3$ précitées.

Lorsque tous les fichiers et les sous fichiers ont été soumis aux étapes $GO_2$ et $GO_3$, c'est-à-dire sur réponse positive à l'étape de tests $GO_4$ et d'atteinte de la valeur maximale des indices $_j = J$ et $_k = K$, on procède alors à une étape $GO_6$ au calcul du temps de transfert global de chaque fichier candidat $F_j$. La durée totale de transmission de chaque fichier candidat $F_j$ par sous fichier candidat successif $F_{jk}$ vérifie la relation :

$$TT_j = \sum_{k=1}^{K} T_{jk}$$

où Tjk désigne la durée de transmission de chaque sous-fichier $F_{jk}$.

L'opération $GO_6$ peut alors être suivie d'une opération de tests $GO_7$ consistant à détecter les retards de transmission susceptibles d'apparaître vis-à-vis de la date d'échéance.

Cette opération est réalisée par la comparaison de la durée totale de transmission de chaque fichier candidat $F_j$, calculée à l'étape $GO_6$ précédente, augmentée bien entendu de la valeur de la date courante $T_c$, date courante donnée par exemple en année mois jour heure minute seconde au niveau du point de transmission des fichiers candidats $F_j$, c'est-à-dire à l'adresse d'origine de ces derniers. L'opération de test réalisée à l'étape $GO_7$ vérifie la relation $TT_j + T_c > RDL_j$. Sur réponse positive à la comparaison de supériorité précitée, une étape $GO_8$ est appelée consistant à incrémenter

l'indice $_i$ de l'intervalle de temps formant la base de temps relative LT, c'est-à-dire à augmenter finalement le temps de transmission pour le fichier $F_j$ et en particulier pour les sous-fichiers $F_{jk}$ constitutifs de ce dernier, suite à la mise en oeuvre du processus de gestion d'ordonnancement . L'étape $GO_8$ est alors suivie d'un rappel par retour des étapes $GO_2$ $GO_3$ et suivantes. La transmission effective de chaque sous fichier $F_{jk}$ est alors effectuée sur réponse négative au test de l'étape $GO_7$.

Le mode opératoire du processus d'ordonnancement pour la transmission tel que décrit en relation avec la figure 4 peut être avantageusement mis en oeuvre lors d'une exécution synchrone ou périodique par exemple, lorsqu'un ensemble de sous-fichiers candidats $F_j$ a été constitué à une adresse d'origine quelconque $@O_j$ à un instant donné, en l'absence d'occurrence d'une requête supplémentaire ultérieure de transmission d'un nouveau fichier candidat pendant un intervalle de temps déterminé, correspondant par exemple à l'un des intervalles de temps de la base de temps relative LT précédemment décrite dans la description.

Un tel mode opératoire est satisfaisant, mais, préférentiellement, le processus de gestion d'ordonnancement pour transmission conforme à l'objet du procédé de gestion temporelle de la transmission en réseau d'une pluralité de données de fichiers numériques candidats, selon l'invention, est avantageusement mis en oeuvre pour des fichiers candidats antérieurs c'est-à-dire préalablement soumis au processus d'ordonnancement tel que décrit en liaison avec la figure 4 et pour des fichiers candidats postérieurs à un cycle d'ordonnancement précédent, ces fichiers candidats postérieurs n'étant pas encore soumis au processus d'ordonnancement.

Ce mode opératoire, dit de manière asynchrone, est préférentiellement mis en oeuvre sur commande d'un utilisateur c'est-à-dire d'un opérateur réseau par exemple ou sur évènement explicite, c'est-à-dire la réception d'une requête de transmission d'un nouveau fichier candidat au niveau du site de transmission de ces fichiers c'est-à-dire à l'adresse $@O_j$ précédemment mentionnée dans la description.

Un tel mode opératoire du processus d'ordonnancement pour transmission et de la gestion de ce dernier sera maintenant décrit en liaison avec la figure 5.

Pour la mise en oeuvre du processus d'ordonnancement pour transmission de manière asynchrone, on dispose à l'étape de départ $GO_9$ de l'ensemble des fichiers antérieurs, fichiers candidats

$$\left\{ F_j \right\}_{j=1}^{j=J} ,$$

pour une transmission à partir des adresses d'origine $@O_j$, ces fichiers candidats $F_j$ étant désignés fichiers antérieurs dans la mesure où ceux-ci ont par exemple été soumis à un processus d'ordonnancement pour attribution d'une valeur d'ordonnancement critique tel que précédemment décrit en liaison avec la figure 2.

On dispose également d'au moins un fichier dit postérieur $f_l$ ou le cas échéant d'un ensemble de fichiers postérieurs

$$\left\{ f_l \right\}_{l=1}^{l=L}$$

pour une transmission d'une adresse d'origine $@O_l$ vers une adresse de destination $@D_l$ par exemple.

On comprend, en particulier, que le ou les fichiers postérieurs sont le ou les fichiers reçus à l'adresse du point de transmission pendant un intervalle de temps déterminé de la base de temps relative suite à la mise en oeuvre d'un processus d'ordonnancement pour transmission tel que décrit précédemment dans la description en liaison avec la figure 4. Le choix de l'intervalle de temps de la base de temps relative peut être déterminé par l'opérateur de manière arbitraire en fonction des impératifs d'exploitation.

En référence à la figure 5, le processus d'ordonnancement de type asynchrone consiste alors, de préférence, à lancer le processus d'ordonnancement tel que représenté en figure 4 sur l'ensemble des fichiers candidats antérieurs pour obtenir un ordonnancement réinitialisé.

Cette opération est réalisée à l'étape $GO_{10}$ et symbolisée par la relation

$$O\left\{ F_j \right\} \rightarrow \left[ V_{jcin} \right]_1^J .$$

Dans cette relation,

$$O\left\{ F_j \right\} \rightarrow \left[ V_{jcin} \right]_1^J$$

désigne en fait la procédure d'ordonnancement de l'ensemble des fichiers antérieurs c'est-à-dire l'attribution d'une valeur critique $V_{jc}$ telle que décrite précédemment dans la description en liaison avec la figure 2. On obtient ainsi la liste des valeurs d'ordonnancement critique constituant l'ordonnancement réinitialisé

$$\left[ V_{jcin} \right]_1^J .$$

L'étape $GO_{10}$ peut alors être suivie d'une étape $GO_{11}$ consistant essentiellement en une procédure de tri des fichiers postérieurs, le tri étant effectué sur la date d'échéance attribué à ces derniers.

L'opération correspondante à l'étape $GO_{11}$ est notée :

$$\left\{ f_l \right\}_{l=1}^{l=L} \quad \text{SORT [RDL}_l\text{]} \quad [\text{fl}_t \mid \text{TA}_t]$$

Dans la notation précédente, la fonction SORT désigne une procédure de tri des fichiers postérieurs $f_l$ sur la date d'échéance $RDL_l$ attribuée à ces derniers.

Grâce à la mise en oeuvre de la procédure de tri précitée, on obtient une liste des fichiers postérieurs triés sur la base de leur date d'échéance, la liste des fichiers postérieurs triés étant notée :

$$[\text{fl}_t \mid \text{TA}_t]$$

Dans la liste précitée, $f_{lt}$ désigne le fichier de tête de liste dont la date d'échéance est la plus critique, c'est-à-dire la plus proche de la date courante, et $TA_t$ désigne la queue de la liste des autres fichiers postérieurs triés. On comprend que la liste des fichiers postérieurs triés constitue en fait un ordonnancement restreint de l'ensemble des fichiers candidats postérieurs.

L'étape $GO_{11}$ peut alors être suivie d'une étape $GO_{12}$ consistant à lancer le processus d'attribution d'une valeur d'ordonnancement sur l'ensemble des fichiers candidats antérieurs augmenté du fichier candidat postérieur introduit, dont la valeur de tri est la plus critique dans l'ordonnancement restreint. Ceci permet d'engendrer un ordonnancement réactualisé.

Sur la figure 5, l'opération réalisée à l'étape $GO_{12}$ est représentée par la relation

$$O \left\{ F_j, f_{lt} \right\} \rightarrow \left[ V_{jatc} \right]_1^{JACT}$$

représentant cette opération.

Dans cette relation, la procédure d'ordonnancement appliquée sur l'ensemble des fichiers actualisés $F_{jact}$ formé par l'ensemble des fichiers antérieurs $F_j$ et l'ensemble des fichiers postérieurs $f_{lt}$ permet d'obtenir la liste des valeurs d'ordonnancement critique

$$\left[ V_{jatc} \right]_1^{JACT}$$

constituant l'ordon-nancement actualisé.

L'étape $GO_{12}$ est suivie d'une étape $GO_{13}$ consistant à calculer le temps de transfert et de retard de chacun des fichiers candidats antérieurs dans l'ordonnancement actualisé, vis-à-vis de leur date d'échéance.

Cette opération peut être effectuée à partir du temps total de transmission $TT_{jact}$ calculé, ainsi que décrit précédemment en liaison avec la figure 4, pour l'ensemble des fichiers actualisés $F_{jact}$ puis par le calcul de cet écart donné par la relation

$$\Delta E_{jact} = RDL_{jact} - (T_c + TT_{jact})$$

En l'absence de tout retard de chacun des fichiers candidats antérieurs, on attribue au fichier candidat postérieur introduit la qualité de fichier candidat antérieur, le fichier candidat postérieur introduit étant simplement inclus dans l'ensemble des fichiers candidats antérieurs $F_j$.

On répète alors, par réitération, les étapes $GO_{12}$, $GO_{13}$ par une boucle d'itération $GO_{14}$.

Ainsi que représenté sur la figure 5, la mise en oeuvre la boucle d'itération $GO_{14}$ peut comprendre une étape de test $GO_{130}$ gouvernant cette dernière et consistant à comparer chacun des retards $\Delta E_{jact}$ par comparaison de supériorité à la valeur 0. Sur réponse positive au test d'étape $GO_{130}$, l'introduction du fichier candidat postérieur $f_{lt}$ n'ayant introduit aucun retard, on procède en $GO_{140}$ à l'appel de la queue de liste des autres fichiers postérieurs $TA_t$ pour extraire le premier fichier candidat postérieur fl't dont la valeur critique est la plus proche de celle du fichier candidat postérieur précédemment introduit à l'étape $GO_{140}$ et l'on réactualise l'ensemble des fichiers candidats $F_{jact}$ en ajoutant $GO_{141}$ à l'ensemble de ces fichiers actualisés lors de l'itération précédente le fichier candidat postérieur $f_{l't}$, dont la valeur d'ordonnancement est la valeur critique la plus proche de celle du fichier candidat postérieur $f_{lt}$ introduit à l'itération précédente. L'étape $GO_{141}$ précitée est suivie d'un retour à l'étape $GO_{12}$ précédemment mentionnée dans la description.

L'itération gouvernée par l'étape de test $GO_{130}$ est ainsi poursuivie tant qu'aucun retard n'est introduit sur le temps de transfert de chacun des fichiers candidats postérieurs actualisés à chaque itération.

Au contraire, sur réponse négative à l'étape de test $GO_{130}$, on retient l'ordonnancement partiellement réactualisé correspondant à l'avant-dernière itération à l'étape $GO_{15}$ et l'on dispose de l'ensemble des fichiers candidats actualisés à la dernière itération ayant subi la procédure d'ordonnancement $O\{F_j, f_{lt}\} \rightarrow [V_{jact}]$.

La relation précédente représente cette opération.

Dans cette relation, la procédure d'ordonnancement appliquée sur l'ensemble des fichiers actualisés, noté $F_{jact}$, formé par l'ensemble des fichiers candidats antérieurs $F_j$ et l'ensemble des fichiers postérieurs $F_{lt}$ permet d'obtenir la liste des valeurs d'ordonnancement critiques $[V_{jact}]$ constituant l'ordonnancement actualisé.

Dans une variante de réalisation, on indique que sur rejet de l'ordonnancement partiellement réactualisé correspondant à la dernière itération et en conséquence, suite à l'étape GO$_{15}$ au cours de laquelle l'ordonnancement partiellement réactualisé correspondant à l'avant-dernière itération a été retenu, il est alors possible de procéder en une étape GO$_{151}$ à l'appel de tout fichier candidat postérieur dont la valeur d'ordonnancement est successivement la moins critique vis-à-vis de celle du fichier candidat postérieur introduit pour lequel l'ordonnancement partiellement réactualisé a été rejeté.

A l'étape GO$_{151}$ de la figure 5, cette opération est symbolisée par la relation :

$$TA't = [fl''_c \mid T''At]$$

On comprend par exemple que l'opération précitée consiste à sélectionner au moins l'un des fichiers candidats postérieurs de la queue de la liste des autres fichiers notée TA't et de choisir dans ces fichiers l'un de ceux qui présente une valeur d'ordonnancement la moins critique.

A titre d'exemple non limitatif, lorsque les valeurs d'ordonnancement critiques sont ordonnées par valeurs critiques décroissantes, il est possible de choisir le fichier dont la valeur critique se trouve en queue de la liste, c'est-à-dire en queue de la queue de liste.

L'étape GO$_{151}$ est suivie d'une étape GO$_{152}$ consistant à actualiser l'ensemble des fichiers candidats actualisés par adjonction du fichier candidat postérieur fl''$_c$ puis par un retour à l'étape GO$_{12}$ pour la poursuite du processus et l'appel itératif soit des étapes GO$_{130}$ et GO$_{14}$ soit des étapes GO$_{15}$, GO$_{151}$ et GO$_{152}$.

En référence aux figures 4 et 5 précédemment décrites, on indique que le procédé objet de la présente invention peut être mis en oeuvre au niveau de tout noeud de réseau ou terminal connecté en réseau.

Toutefois, et en particulier lorsque la transmission des données constitutives des fichiers candidats est effectuée au moyen d'un protocole de transfert par paquets de données tel que le protocole TCP/IP, le procédé objet de l'invention apparaît particulièrement avantageux dans la mesure où il consiste à exécuter l'ensemble des étapes appliquées à au moins un des paquets transmis, chaque paquet transmis pouvant ainsi être traité comme un sous-fichier candidat.

On comprend en particulier qu'il est alors envisageable de mettre en oeuvre le procédé objet de la présente invention au niveau de tout noeud de réseau, notamment entre deux noeuds successifs constitutifs d'un trajet de routage, les deux noeuds successifs pouvant alors constituer l'adresse d'origine @O$_j$ respectivement l'adresse de destination @D$_j$ par exemple.

Une description plus détaillée d'un système de gestion temporelle de la transmission en réseau d'une pluralité de fichiers numériques candidats au transfert, conforme à l'objet de la présente invention, sera maintenant donnée en liaison avec les figures 6a et 6b.

D'une manière générale, on indique que le système objet de la présente invention peut être mis en oeuvre selon une architecture centralisée et/ou selon une architecture délocalisée, ainsi qu'il sera décrit ci-après en liaison avec les figures précitées.

Dans l'un et l'autre cas de mise en oeuvre du système objet de la présente invention, on indique que les modules fonctionnels mis en oeuvre sont sensiblement identiques, seuls le mode et le lieu d'implantation de ces derniers pouvant être modifiés en fonction des impératifs de l'architecture centralisée et/ou délocalisée.

D'une manière générale, on rappelle que le transfert des fichiers candidats est effectué entre une adresse d'origine et une adresse de destination représentative d'un trajet de transfert.

En outre, chacun des fichiers candidats comporte un volume de données déterminé à transférer, ainsi que décrit précédemment dans la description.

D'une manière générale, pour tout fichier candidat F$_j$ muni au moins d'une date limite de réception RDL$_j$ à l'adresse de destination @Oj constituant date d'échéance, le système objet de l'invention comprend au moins un module de calcul, pour chaque fichier candidat F$_j$, de la date d'envoi TD$_j$(RDL$_j$) compte tenu au moins de la date d'échéance RDL$_j$ précitée.

Sur la figure 6a relative à l'architecture centralisée, le module de calcul de la date d'envoi est constitué par un module logiciel implanté sur le site centralisé hébergeant un serveur, ce module logiciel, module de gestion des demandes étant noté L$_E$[TD$_j$(RDL$_j$)].

En outre, le système objet de l'invention comporte un module de commande de la transmission de chaque fichier candidat par l'intermédiaire d'un protocole de transmission de données numériques.

Sur la figure 6a, dans le cadre de l'architecture centralisée, le module de commande de la transmission de chaque fichier est implanté au niveau de chaque terminal client A, B ou C pour assurer la transmission des fichiers à la demande de chacun des clients précités.

La transmission des fichiers est effectuée de manière connue en tant que telle par l'intermédiaire d'un protocole de transmission de données numériques.

On comprend en particulier que, le module de commande d'envoi des fichiers TM$_A$, TM$_B$ et TM$_C$ représenté pour chaque client sur la figure 6a permet d'effectuer une commande automatique de reprise de transmission successive, tant que le fichier candidat F$_j$ correspondant n'a pas été transmis antérieurement à la date d'échéance RDL$_j$.

On comprend en particulier que la commande automatique de reprise de transmission successive pour chacun des fichiers considérés au niveau de chacun des terminaux client peut être mise en oeuvre ainsi que décrit précédemment dans la description en liaison avec les figures 2, 3, 4 et 5.

Le système objet de l'invention comporte en outre accessible à tout utilisateur muni d'un terminal client A, B ou C connecté au réseau et demandeur d'un transfert de fichiers entre l'adresse de ce terminal adresse d'origine et adresse de destination, un module d'attribution par le terminal utilisateur, d'une date d'envoi attribuée à chaque fichier candidat et un module d'attribution d'une valeur de priorité $P_j$ attribuée à chaque fichier candidat $F_j$.

Ainsi que représenté sur la figure 6a pour le cas de l'architecture centralisée, on indique que selon un mode de mise en oeuvre préférentiel, le module de logiciel de gestion des demandes $L_E[TD_j(RDL_j)]$ permet en fait d'établir un échéancier formé par un tableau de valeurs ou liste de valeurs permettant de regrouper pour chaque fichier $F_j$ des paramètres tels que la date d'envoi $TD_j(RDL_j)$ et la valeur critique d'ordonnancement $V_{jc}$ attribuée au fichier $F_j$ correspondant.

Cet échéancier est noté :

$$E([[V_{jc}, TD_j(RDL_j)]|...])$$

A titre d'exemple non limitatif, on comprend dans le cas de l'architecture centralisée que le terminal client A après création d'un compte de transmission de fichiers par exemple et de désignation et de transmission des adresses d'origine et de destination du fichier à transférer auprès du module de gestion des demandes permet, à titre d'exemple non limitatif, de transmettre une requête de transfert vers l'échéancier implanté au niveau du serveur, cette requête de transfert comportant au moins les paramètres relatifs à la date d'échéance $RDL_j$, l'adresse d'origine et la priorité $P_j$, cette requête étant notée

$$R_{eq}(RDL_j, @O_j, P_j).$$

En réponse, le serveur transmet à partir de l'échéancier une instruction autorisant le transfert et comportant au moins la date d'envoi $TD_j(RDL_j)$ ainsi que par exemple la valeur d'ordonnancement $V_{jc}$ attribuée au fichier candidat $F_j$.

Enfin, le système objet de l'invention comprend au niveau du terminal client un module d'attribution d'une valeur de priorité $P_j$ attribuée à chaque fichier candidat $F_j$. Ce module peut être constitué par un module logiciel permettant l'introduction au clavier, ou par tout moyen adapté, de la valeur de priorité précitée.

Enfin, et selon un aspect remarquable du système objet de la présente invention, ce dernier comporte associé au module de calcul de la date d'envoi au moins un module agent logiciel d'ordonnancement des fichiers candidats.

Ce module dit d'ordonnancement est noté Lo([Vjc,@oj,@Dj]).

On comprend, en particulier, que le module logiciel d'ordonnancement précité est implanté au niveau du serveur dans l'architecture centralisée représentée en figure 6A et permet avantageusement de calculer la valeur d'ordonnancement critique $V_{jc}$ ainsi que précédemment décrit en liaison avec la figure 2.

La valeur d'ordonnancement critique $V_{jc}$ peut alors avantageusement être associée à la valeur de la date d'envoi $TD_j(RDL_j)$ dans l'échéancier par exemple. Ces paramètres peuvent alors avantageusement être transmis par le message d'instructions précédemment mentionné $I_{nst}[TD_j(RDLj),V_{jc}]$ par exemple pour traitement et ordonnancement de la transmission par le module d'envoi de fichiers $TM_A$, $TM_B$ ou $TM_C$ tel que représenté sur les terminaux clients A, B, C dans la version relative à l'architecture centralisée.

Le mode d'ordonnancement pour transmission correspond à celui décrit en liaison avec les figures 4 et 5 précédemment décrites dans la description.

Conformément à un aspect remarquable du système objet de la présente invention, on indique que les fichiers candidats sont, de manière générale, mémorisés sous forme d'une file d'attente en fonction de la valeur d'ordonnancement attribuée à chacun de ces derniers. La file d'attente précitée est alors utilisée pour assurer la transmission séquentielle des fichiers candidats ainsi que décrit précédemment dans la description avec les figures 4 et 5.

Le module d'envoi ou de commande de la transmission de chaque fichier candidat $TM_A$, $TM_B$ ou $TM_C$ comprend au moins un module agent logiciel permettant de discriminer la valeur de l'ordonnancement attribuée à chaque fichier candidat $F_j$ la plus critique $V_{jc}$ et de comparer la date d'envoi $TD_j(RDL_j)$ allouée à chaque fichier candidat à la date courante. La transmission est alors effectuée pour tout ou partie des fichiers candidats Fj conformément au processus décrit en liaison avec les figures 4 et 5.

En ce qui concerne, de manière plus particulière, la mise en oeuvre du système objet de l'invention selon l'architecture centralisée représentée en figure 6a, on indique que le module d'attribution de la date d'envoi, c'est-à-dire le module de gestion des demandes, module logiciel $L_E[TD_j(RDL_j)]$ est associé à une base de données contenant les échéanciers de date d'envoi établis par l'agent logiciel d'ordonnancement précité. Cet agent logiciel assure la mise à jour des échéanciers dans la base de données et permet l'interrogation selon un protocole client-serveur entre chaque terminal client A, B, C et le serveur, ce protocole permettant de gérer l'accès à la base de données précitée.

En ce qui concerne la mise en oeuvre du système objet de l'invention selon une architecture délocalisée, telle que représentée en figure 6b, on indique que dans cette situation le module d'attribution de la date d'envoi $L_E[TD_j(RDL_j)]$ est implanté au niveau de chaque noeud de réseau étendu, les noeuds précités sur la figure 6b étant représentés, à titre d'exemple non limitatif, par un Routeur A, un Routeur B et un Routeur C.

En raison de la délocalisation de l'architecture précitée au niveau des noeuds ou routeurs, on indique que chaque module de gestion des demandes est noté $L_{EA}[TD_j(RDL_j)]$, les indices A, B, C étant affectés à chacun des modules logiciels de gestion pour les noeuds ou routeurs correspondants Routeur A, B et C.

De manière avantageuse, le module de gestion et le module de transmission ou d'envoi des paquets peuvent alors être regroupés au niveau de chaque noeud ou routeur ainsi que représenté de manière non limitative sur la figure 6b.

En outre, ainsi que représenté sur la figure précitée, chaque noeud du réseau étendu Routeur A, B, C dispose au moins d'une base de données contenant les échéanciers de date d'envoi établis par le logiciel d'ordonnancement, c'est-à-dire le module de gestion précédemment cité.

De même que dans le cas de l'architecture centralisée représentée en figure 6a, cet agent logiciel permet d'assurer une mise à jour des échéanciers dans la base de données pour tout groupe de paquets de données contenant au moins un paquet de données constitutif d'un fichier ou d'un sous-fichier candidat. On comprend, en particulier, que le processus d'ordonnancement et d'attribution des valeurs d'ordonnancement est mis en oeuvre par un module d'ordonnancement lequel est noté par analogie avec la figure 6a $L_{EA}([V_{jc}, @O_j, @D_j])$ pour le noeud ou Routeur A, l'indice A étant changé en indice B respectivement C pour le noeud ou routeurs B et C.

Le mode opératoire pour ce qui concerne la mise à jour des échéanciers d'une part et la commande de la transmission ou d'envoi des paquets d'autre part est bien entendu mis en oeuvre conformément au processus précédemment décrit dans la description en liaison avec les figures 2, 3, 4 et 5. En particulier, on indique que toute partie de fichier candidat peut être constituée par un paquet de transmission de données selon le protocole TCP/IP.

En référence aux figures 6a et 6b, on indique que le système objet de la présente invention est particulièrement avantageux dans la mesure où le module de commande de la transmission de chaque fichier $TM_A$, $TM_B$, $TM_C$ ou $TM_{RA}$, $TM_{RB}$ ou $TM_{RC}$ sont avantageusement implémentés sur tout site comportant au moins un terminal utilisateur connecté en réseau local demandeur de transfert de fichier candidat et/ou sur tout noeud d'un réseau étendu et/ou Internet.

En particulier, dans le cas de la mise en oeuvre du procédé et d'un système objets de la présente invention selon la seule architecture centralisée tel que représenté en figure 6a, on indique que ces derniers permettent d'assurer avec un haut degré de certitude la transmission des fichiers précités avant la date d'échéance fixée par l'utilisateur, ce haut degré de certitude étant simplement limité par le mode de transmission classique et les performances de transmission classique sur le réseau Internet selon le protocole TCP/IP dans le mode de transmission désigné "best effort".

On comprend ainsi que dans le cadre de ce mode de transmission "best effort", toutes choses égales par ailleurs, le degré de certitude est sensiblement égal à 1, lorsque les conditions de transmission selon ce mode sont sensiblement satisfaites.

Au contraire, la mise en oeuvre du procédé et du système objets de l'invention selon l'architecture délocalisée bien que ne permettant pas d'augmenter le degré de certitude de la transmission des fichiers avant la date d'échéance selon le mode de transmission dit "best effort", permet toutefois la prise en compte de la priorité, du volume de données à transmettre et de la date d'échéance pour chaque fichier candidat $F_j$, ainsi que du temps passé dans les files d'attente par une insertion de ces données dans un champ supplémentaire de l'entête de chaque paquet IP transmis par les routeurs ou noeuds du réseau. Dans ces conditions, la mise en oeuvre du procédé et du système objets de la présente invention permet, bien entendu, d'optimiser le transfert de fichiers et sous-fichiers candidats sur tout lien d'un trajet de transfert entre deux noeuds du réseau précité.

On comprend ainsi que selon une utilisation particulièrement avantageuse du procédé et du système objet de la présente invention, ces derniers mis en oeuvre selon l'architecture centralisée et l'architecture décentralisée permettent d'assurer une optimisation d'ensemble de la transmission des fichiers candidats et, en définitive, du mode de transmission "best effort".

Bien entendu, l'invention concerne également des produits logiciels mémorisés sur un support de mémorisation et destinés à être exécutés par un ordinateur.

Un premier produit logiciel est formé par un agent logiciel d'exécution d'un processus d'ordonnancement de fichiers candidats au transfert entre une adresse d'origine et une adresse de réception, cet agent logiciel permettant au moins d'attribuer à chaque fichier candidat une valeur d'ordonnancement représentative du caractère critique de ce transfert vis-à-vis de la date d'échéance.

Un deuxième produit logiciel est formé par un agent logiciel de commande de la transmission de fichiers candidats au transfert entre l'adresse d'origine et l'adresse de réception précitée, cet agent logiciel permettant au moins de discriminer la valeur d'ordonnancement attribuée à chaque fichier candidat la plus critique et de comparer la date d'envoi allouée à chaque fichier candidat à la date courante.

## Revendications

1. Procédé de gestion temporelle de la transmission en réseau d'une pluralité de fichiers de données numériques candidats au transfert entre une adresse d'origine et une adresse de destination, représentatives d'un trajet de transfert, chacun desdits fichiers candidats comportant un volume de données déterminé à transférer, **caractérisé en ce qu'**il consiste, pour l'ensemble desdits fichiers candidats, à :

A) attribuer à chaque fichier candidat une date limite de réception à l'adresse de destination, dite date d'échéance ;

B) déterminer, pour chaque fichier candidat, la date d'envoi, compte tenu au moins de la date d'échéance ;

C) transmettre chaque fichier candidat, par l'intermédiaire d'un protocole de transmission de données numériques, en effectuant des reprises de transmission successives, tant que ledit fichier candidat n'a pas été intégralement transmis antérieurement à ladite date d'échéance.

2. Procédé selon la revendication 1, **caractérisé en ce que** l'opération consistant, pour chaque fichier candidat, à déterminer la date d'envoi consiste à :

1) - attribuer à chaque fichier candidat une valeur d'ordonnancement, établie à partir d'un processus d'ordonnancement multicritère selon lequel :

■ à tout fichier candidat dont la date d'échéance est plus proche que celle d'un autre fichier candidat est attribuée une valeur d'ordonnancement plus critique que celle de cet autre fichier candidat ;

■ à tout fichier candidat dont la priorité est supérieure à celle d'un autre fichier candidat est attribuée une valeur d'ordonnancement plus critique que celle de cet autre fichier candidat ;

■ à tout fichier candidat dont la taille est supérieure à la taille d'un autre fichier candidat est attribuée une valeur d'ordonnancement plus critique que celle de cet autre fichier candidat ;

■ à tout fichier candidat dont le temps écoulé en attente de transmission est supérieur à celui d'un autre fichier candidat est attribuée une valeur d'ordonnancement plus critique que celle de cet autre fichier ;

2) - à retenir comme date d'envoi, la date courante pour le fichier candidat dont la valeur d'ordonnancement est la plus critique.

3. Procédé selon la revendication 2, **caractérisé en ce que** ladite valeur d'ordonnancement attribuée à chaque fichier candidat vérifie la relation :

V = *temps_restant / (priorité \* temps-écoulé \* taille)*

dans laquelle

o *temps_restant* désigne le temps restant entre la date d'échéance et la date courante pour chaque fichier candidat ;

o *priorité* désigne la valeur d'un coefficient de priorité, valeur entière dont la valeur 1 est la valeur la plus petite et correspond à la priorité la plus faible ;

o *temps_écoulé* désigne le temps écoulé pour chaque fichier candidat entre la date courante et la date de prise en compte de la demande de transfert ;

o *taille* désigne la taille du fichier en unité de taille mémoire occupée par chaque fichier candidat.

4. Procédé selon l'une des revendications 1 à 3, **caractérisé en ce que** l'opération consistant à déterminer la date d'envoi et l'opération consistant à transmettre chaque fichier candidat en effectuant les reprises de transmissions successives, tant que ledit fichier de données candidat au transfert n'a pas été intégralement transmis, sont exécutées en référence à des intervalles de temps discrets, non décroissants, constituant une base de temps relative, ladite base de temps relative permettant d'adapter la précision de l'établissement des dates d'envoi et de réception des fichiers candidats en fonction de la date courante vis-à-vis de la date d'échéance.

5. Procédé selon la revendication 3 ou 4, **caractérisé en ce que** ledit processus d'ordonnancement est exécuté :

- de manière synchrone et périodique, la période d'exécution dudit processus d'ordonnancement étant définie à partir d'un intervalle de temps discret spécifique constituant ladite base de temps relative ; et/ou

- de manière asynchrone sur commande ou évènement explicite.

6. Procédé selon l'une des revendications précédentes, **caractérisé en ce que** pour une transmission de chaque fichier candidat au moyen d'un protocole de transfert par paquets de données, ledit procédé consiste à exécuter l'ensemble des étapes appliquées à au moins un des paquets transmis, ledit au moins un des paquets transmis étant traité comme un sous-fichier candidat.

7. Système de gestion temporelle de la transmission en réseau d'une pluralité de fichiers numériques candidats au transfert entre une adresse d'origine et une adresse de destination, représentatives d'un trajet de transfert, chacun desdits fichiers candidats comportant un volume de données déterminé à transférer, **caractérisé en ce qu'**il comporte au moins, pour tout fichier candidat muni au moins d'une date limite de réception à l'adresse de destination, dite date d'échéance :

- des moyens de calcul, pour chaque fichier candidat, de la date d'envoi compte tenu au moins de la date d'échéance ; et
- des moyens de commande de la transmission de chaque fichier candidat, par l'intermédiaire d'un protocole de transmission de données numériques, lesdits moyens de commande permettant d'effectuer une commande automatique, de reprises de transmission successives, tant que ledit fichier candidat n'a pas été transmis antérieurement à la date d'échéance.

8. Système selon la revendication 7, **caractérisé en ce qu'**il comporte en outre, accessible à tout utilisateur muni d'un terminal connecté audit réseau et demandeur d'un transfert de fichiers entre l'adresse de ce terminal, constituant ladite adresse d'origine, et ladite adresse de destination :

- des moyens d'attribution par ledit terminal utilisateur d'une date d'envoi attribuée à chaque fichier candidat ;
- des moyens d'attribution d'une valeur de priorité attribuée à chaque fichier candidat.

9. Système selon l'une des revendications 7 ou 8, **caractérisé en ce que** lesdits moyens de calcul, pour chaque fichier candidat, de la date d'envoi compte tenu au moins de la date d'échéance comprennent au moins un module agent logiciel d'ordonnancement desdits fichiers candidats, à chaque fichier candidat étant attribuée une valeur d'ordonnancement fonction de ladite date d'échéance.

10. Système selon l'une des revendications 7 à 9, **caractérisé en ce que** lesdits moyens de calcul de la date d'envoi sont implantés au niveau de chaque noeud d'un réseau étendu, chaque noeud du réseau étendu disposant au moins d'une base de données contenant les échéanciers de dates d'envoi établies par ledit logiciel d'ordonnancement, ledit agent logiciel assurant une mise à jour des échéanciers dans la base de données pour tout groupe de paquets de données, contenant au moins un paquet de données, constitutif d'un fichier ou d'un sous-fichier candidat.

11. Système selon l'une des revendications 7 à 10, **caractérisé en ce que** lesdits moyens de commande de la transmission de chaque fichier candidat sont implémentés sur tout site comportant au moins un terminal utilisateur connecté en réseau local demandeur de transfert de fichiers candidats, respectivement sur tout noeud d'un réseau étendu et/ou INTERNET, ce qui permet d'optimiser le transfert de fichiers, sous-fichiers candidats sur tout lien d'un trajet de transfert entre deux noeuds dudit réseau.

12. Serveur hébergé par un site centralisé pour la gestion temporelle de la transmission en réseau d'une pluralité de fichiers numériques candidats au transfert entre une adresse d'origine et une adresse de destination, représentatives d'un trajet de transfert, chacun desdits fichiers candidats comportant un volume de données déterminé à transférer, **caractérisé en ce que** ledit serveur comporte un module logiciel de calcul de la date d'envoi implanté sur ledit site centralisé, audit site centralisé étant associée une base de données contenant les échéanciers de date d'envoi établies par un agent logiciel d'ordonnancement, assurant une mise à jour des échéanciers dans la base de données.

13. Produit logiciel mémorisé sur un support de mémorisation et destiné à être exécuté par un ordinateur, **caractérisé en ce qu'**il est formé par un agent logiciel d'exécution d'un processus d'ordonnancement de fichiers candidats au transfert entre une adresse d'origine et une adresse de réception, ledit agent logiciel permettant au moins d'attribuer à chaque fichier candidat une valeur d'ordonnancement représentative du caractère critique de ce transfert vis-à-vis d'une date d'échéance.

14. Produit logiciel mémorisé sur un support de mémorisation et destiné à être exécuté par un ordinateur, **caractérisé en ce qu'**il est formé par un agent logiciel de commande de la transmission de fichiers candidats au transfert entre une adresse d'origine et une adresse de réception, ledit agent logiciel permettant au moins de discriminer la valeur d'ordonnancement attribuée à chaque fichier candidat la plus critique et de comparer la date d'envoi allouée à chaque fichier candidat à la date courante.

$\{F_j\}_{j=1}^{j=J}$

$F_j, @0_j, @D_j$

$F_j, RDL_j$ — A

$F_j \longrightarrow TD_j(RDL_j)$ — B

Transmission
$F_{jk} @0_j \longrightarrow @D_j$ — $C_o$

$k=k+1$ — $C_2$

$F_j \in @D_j$ — $C_1$

$C$

FIN

**FIG.1a**

Utilisateur

Opérateur — $B'$

$P_j$

$F_j \longrightarrow TD_j(RDL_j, P_j, S_j, B_{pathj})$

$S_j$

$S_{pathj}$

**FIG.1b**

$$\{F_j\}_{j=1}^{j=J}$$

$O_1 \Big\{ \quad RDL_j < RDL_{j+s} \quad O_{10} \quad \xrightarrow{+} \quad V_j \overset{c}{>} V_{j+s} \quad O_{11}$

$O_2 \Big\{ \quad P_j > P_{j+t} \quad O_{20} \quad \xrightarrow{+} \quad V_j \overset{c}{>} V_{j+t} \quad O_{21}$

$O_3 \Big\{ \quad S_j > S_{j+u} \quad O_{30} \quad \xrightarrow{+} \quad V_j \overset{c}{>} V_{j+u} \quad O_{31}$

$O_4 \Big\{ \quad LT_j > LT_{j+v} \quad O_{40} \quad \xrightarrow{+} \quad V_j \overset{c}{>} V_{j+v} \quad O_{41}$

$$V_{jc} = RT_j / P_{j*} \; LT_{j*} \, S_j \quad O_5$$

## _FIG.2_

| 0' | | 30' | 34' | | 2h20' | 2h27' | 2h40' |

date d'envoi de $F_j$

date d'arrivée de $F_j$

## _FIG.3_

**FIG.4**

$$\{F_j\}_{j=1}^{j=J} \quad F_j, @O_j, @D_j$$
$$\{fl\}_{l=1}^{l=L} \quad f_l, @O_l, @D_l$$

— $GO_9$

$$O\{F_j\} \longrightarrow [V_{jcin}]_1^J$$

— $GO_{10}$

$$\{fl\}_{l=1}^{l=L} \quad SORT[RDL_l] \quad [fl_t:TA_t]$$

— $GO_{11}$

$GO_{141}$

$$O\{\underbrace{F_j, fl_t}_{Fjact}\} \longrightarrow [V_{jact}]_1^{JACT}$$

— $GO_{12}$

$$F_{jact} = \{F_{jact} + fl''_t\}$$

*Calcul*
$$TT_{jact}$$
$$\Delta E_{jact} = RDL_{jact} - (T_c + TT_{jact})$$

— $GO_{13}$

$GO_{140}$

$$TA_t = [fl':T'A_t]$$

$GO_{130}$

$$\Delta E_{jact} > 0$$

$+$

$GO_{152}$

$$F_{jact} = F_{jact} + fl''_c$$

$-$

$$O\{F_j, fl_t\} \longrightarrow [V_{jact}]$$

— $GO_{15}$

$$TA't = [fl''_c:T''AT]$$

— $GO_{151}$

**_FIG.5_**

**FIG.6a**

Architecture centralisée

**FIG.6b**
Architecture délocalisée

**EP 1 549 017 A1**

**Office européen des brevets**

**RAPPORT DE RECHERCHE EUROPEENNE**

Numéro de la demande

EP 04 29 3035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 920 701 A (CATES KENNETH ET AL) 6 juillet 1999 (1999-07-06) * abrégé; figure 3 * * colonne 1, alinéa 51 - colonne 3, alinéa 62 * * colonne 6, ligne 52-59 * * colonne 7, ligne 15-19,52-61 * * colonne 8, ligne 14 - colonne 9, ligne 1 * * colonne 9, ligne 40 - colonne 10, ligne 11 * * colonne 13, ligne 10-48 * ----- | 1,2,4-14 | H04L29/06 H04L12/56 |
| X | WO 02/052768 A (RADIANCE TECHNOLOGIES INC) 4 juillet 2002 (2002-07-04) * alinéas [0006] - [0008] * * alinéas [0011], [0013], [0015], [0018] * * alinéas [0024] - [0026] * * alinéas [0033] - [0037], [0042], [0043] * * alinéas [0046] - [0056] * * alinéa [0060] * ----- | 1,2,4-14 | |
| A | US 2003/101272 A1 (UJYO EIJI ET AL) 29 mai 2003 (2003-05-29) * alinéas [0011] - [0014] * * alinéas [0050] - [0058] * * alinéas [0075] - [0077] * * alinéas [0102] - [0111] * ----- | | DOMAINES TECHNIQUES RECHERCHES (Int.Cl.7) H04L |
| A | US 2003/026279 A1 (ONODA TETSUYA ET AL) 6 février 2003 (2003-02-06) * alinéas [0013], [0057] * * alinéas [0075] - [0077] * * alinéas [0117] - [0120] * * alinéas [0128] - [0130] * * alinéas [0156] - [0165] * ----- -/-- | 1,4 | |

Le présent rapport a été établi pour toutes les revendications

| Lieu de la recherche | Date d'achèvement de la recherche | Examinateur |
|---|---|---|
| Munich | 3 mars 2005 | Losseau, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**
**des brevets**

**RAPPORT DE RECHERCHE EUROPEENNE**

Numéro de la demande

EP 04 29 3035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01/15394 A (SPINWAY INC ;LEVOW ZACHARY S (US); ROBINSON DAN B (US); GRIFFITH M) 1 mars 2001 (2001-03-01) * page 8, ligne 18 - page 9, ligne 30 * * revendication 1 * ----- | 1,6 | |
| A | US 6 134 596 A (BOLOSKY WILLIAM J ET AL) 17 octobre 2000 (2000-10-17) * colonne 8, ligne 48 - colonne 9, ligne 59 * ----- | 1 | |
| A | US 2002/118683 A1 (NARAYANA PIDUGU ET AL) 29 août 2002 (2002-08-29) * alinéa [0008] * * alinéas [0052], [0053] * * alinéas [0113] - [0126] * ----- | 1,4-6 | |

DOMAINES TECHNIQUES
RECHERCHES (Int.Cl.7)

Le présent rapport a été établi pour toutes les revendications

| Lieu de la recherche | Date d'achèvement de la recherche | Examinateur |
|---|---|---|
| Munich | 3 mars 2005 | Losseau, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 3035

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2005

| Document brevet cité au rapport de recherche | | Date de publication | Membre(s) de la famille de brevet(s) | | Date de publication |
|---|---|---|---|---|---|
| US 5920701 | A | 06-07-1999 | US | 5727002 A | 10-03-1998 |
| | | | US | 5553083 A | 03-09-1996 |
| | | | AU | 4092597 A | 19-03-1998 |
| | | | WO | 9809412 A1 | 05-03-1998 |
| | | | US | 6151696 A | 21-11-2000 |
| | | | US | 6625652 B1 | 23-09-2003 |
| | | | US | 6453438 B1 | 17-09-2002 |
| | | | AT | 209411 T | 15-12-2001 |
| | | | AU | 5295096 A | 07-08-1996 |
| | | | DE | 69617204 D1 | 03-01-2002 |
| | | | DE | 69617204 T2 | 04-07-2002 |
| | | | DK | 804838 T3 | 18-03-2002 |
| | | | EP | 1128591 A2 | 29-08-2001 |
| | | | EP | 0804838 A2 | 05-11-1997 |
| | | | ES | 2163011 T3 | 16-01-2002 |
| | | | JP | 10512726 T | 02-12-1998 |
| | | | WO | 9622641 A2 | 25-07-1996 |
| WO 02052768 | A | 04-07-2002 | WO | 02052768 A2 | 04-07-2002 |
| | | | US | 2002080721 A1 | 27-06-2002 |
| | | | US | 2002083185 A1 | 27-06-2002 |
| US 2003101272 | A1 | 29-05-2003 | JP | 2003162470 A | 06-06-2003 |
| US 2003026279 | A1 | 06-02-2003 | JP | 2002368797 A | 20-12-2002 |
| WO 0115394 | A | 01-03-2001 | AU | 6942200 A | 19-03-2001 |
| | | | WO | 0115394 A1 | 01-03-2001 |
| US 6134596 | A | 17-10-2000 | WO | 9914687 A2 | 25-03-1999 |
| US 2002118683 | A1 | 29-08-2002 | WO | 02069582 A2 | 06-09-2002 |
| | | | WO | 02069544 A2 | 06-09-2002 |
| | | | WO | 02069583 A1 | 06-09-2002 |
| | | | WO | 02069584 A1 | 06-09-2002 |
| | | | US | 2002118645 A1 | 29-08-2002 |
| | | | US | 2002118706 A1 | 29-08-2002 |
| | | | US | 2002126690 A1 | 12-09-2002 |

EPO FORM P0460

Pour tout renseignement concernant cette annexe : voir Journal Officiel de l'Office européen des brevets, No.12/82